# EUROPÄISCHE PATENTSCHRIFT

(11) **EP 3 146 591 B1**
(45) Veröffentlichungstag und Bekanntmachung des Hinweises auf die Patenterteilung: **28.07.2021**
(21) Anmeldenummer: 15730056.7
(22) Anmeldetag: 21.05.2015
(51) Int. Cl.: H01P 7/10, G01B 15/00, H01Q 9/04

(54) **ABSTANDSMESSVORRICHTUNG, INSBESONDERE FÜR METALLISCHE UND DIELEKTRISCHE ZIELOBJEKTE**
DISTANCE MEASURING DEVICE, IN PARTICULAR FOR DIELECTRIC AND METALLIC TARGET OBJECTS
DISPOSITIF DE MESURE DE DISTANCE, EN PARTICULIER POUR DES OBJETS CIBLES MÉTALLIQUES ET DIÉLECTRIQUES

(30) Priorität: 23.05.2014 DE 102014007643
(43) Veröffentlichungstag der Anmeldung: 29.03.2017
(73) Patentinhaber: Astyx GmbH, 85521 Ottobrunn (DE)
(72) Erfinder: TRUMMER, Stefan, 82064 Straßlach-Dingharting (DE)
(74) Vertreter: Berkenbrink, Kai-Oliver
(86) Internationale Anmeldenummer: PCT/EP2015/001039
(87) Internationale Veröffentlichungsnummer: WO 2015/176822

(56) Entgegenhaltungen:
- EP-B1- 1 000 314
- US-A- 4 706 052
- US-A- 5 059 929
- US-A1- 2012 212 386
- US-B1- 7 173 435
- None

## Beschreibung

Die Erfindung betrifft eine Abstandsmessvorrichtung, insbesondere für metallische und dielektrische Zielobjekte. Aus der EP 1 000 314 B1 ist eine Abstandsmessvorrichtung mit einem Sensor und einer Auswertelektronik bekannt, bei der der Sensor einen Resonator in Form eines Hohlraumresonators aufweist, der mit einem Fluidmaterial, z.B. Luft oder inertem Gas, gefüllt ist. US 5,059,929 A beschreibt einen dielektrischen Resonator, der eine dielektrische Einheit aufweist, die durch Aufeinanderschichten einer Anzahl von plattenförmigen Dielektrika aufgebaut ist, wobei die Dielektrika unter Druck gehalten oder miteinander verklebt sind, so dass ein elektrisches Feld in einem anderen Resonanzmode als dem dominanten Resonanzmode nicht durch die Flächen, die miteinander verklebt sind oder unter Druck miteinander in Kontakt stehen, gelangen kann, so dass das Auftreten von Störmoden unterdrückt werden kann.

US 4,706,052 A beschreibt einen dielektrischen Resonator, der mit einer Vielzahl von dielektrischen Resonatoreinheiten versehen ist, die zu einer Einheit zusammengefasst sind, wobei eine Grenze zwischen benachbarten dielektrischen Resonatoreinheiten gebildet ist, ein Verbindungsmaterial zum starren Verbinden der benachbarten dielektrischen Resonatoreinheiten miteinander, ein Trägerelement zum Anordnen der genannten dielektrischen Resonatoreinheiten darauf, ein metallisches leitendes Gehäuse, das die dielektrischen Resonatoreinheiten auf dem Trägerelement darin aufnimmt, und Eingangs- und Ausgangselemente zur elektrischen Verbindung des dielektrischen Resonators mit einer externen Schaltung. US 7,173,435 B1 beschreibt eine Messvorrichtung zum Messen einer Dicke einer Filmschicht über einem Substrat, die eine Mikrowellenquelle und einen Resonanzhohlraum mit einer offenen Seite verwendet. US 2012/212386 A1 beschreibt eine dielektrische Resonatorantenne, die einen dielektrischen Resonator, eine Masseebene, die betriebsmäßig mit dem dielektrischen Resonator gekoppelt ist, aufweist, wobei die Masseebene vier Schlitze aufweist, und ein Substrat, das betriebsmäßig mit der Masseebene gekoppelt ist und ein Speisungsnetzwerk aufweist, das aus vier Mikrostreifenleitungen besteht.

Alternativ werden für Messungen im Nahbereich induktive, kapazitive, optische und Ultraschall-Sensoren verwendet.

Induktive Sensoren beruhen auf dem Prinzip magnetischer Wechselfelder und funktionieren ausschließlich bei metallischen Zielen, wobei zum Erlangen hoher Messgenauigkeit das Material und dessen Größe bekannt sein muss. Induktive Sensoren, die direkt nebeneinander montiert werden, beeinflussen sich gegenseitig, da ihr Detektionsbereich einen Winkelbereich von bis zu 180° umfasst. Zudem können statische und dynamische magnetische Felder die Funktionalität des Sensors beeinträchtigen. Auch die Messgenauigkeit schwankt mit der Temperatur.

Bei kapazitiven Sensoren müssen für eine zuverlässige Abstandmessung sowohl das Material als auch die Objektgröße des Ziels bekannt sein. Des Weiteren wird die Messgenauigkeit durch die Luftfeuchtigkeit, die Temperatur und elektromagnetische Felder beeinflusst.

Optische Sensoren können nur in begrenztem Umfang in industriellen Anwendungen eingesetzt werden, da ihre Funktionalität in verschmutzten Umgebungen nicht gewährleistet ist.

Bei Ultraschaltsensoren ist die Messgenauigkeit stark abhängig von den Umgebungsbedingungen, wie z.B. der Luftfeuchtigkeit und der Temperatur.

Mit der Erfindung wird eine Abstandmessvorrichtung gemäß Patentanspruch 1 geschaffen, die insbesondere für metallische und dielektrische Ziele, aber auch für andere Zielmaterialen wie z.B. beschichtete Kunststoffmaterialen einsetzbar ist und sich durch sehr gute Messeigenschaften auszeichnet.

Mit der Erfindung wird weiterhin eine Vorrichtung, z.B. Abstandmessvorrichtung, gemäß Patentanspruch 4 geschaffen, die sich durch besondere Resonanzeigenschaften oder Resonanzmoden auszeichnet.

Einige Ausgestaltungen sind in den Unteransprüchen angegeben.

Bei einem, mehreren oder allen Ausführungsbeispielen der erfindungsgemäßen Abstandsmessvorrichtung oder des erfindungsgemäßen Abstandsmessverfahrens wird der Vorteil erzielt, dass eine erhebliche Reichweitensteigerung erreicht wird, d.h. der messbare Abstand zwischen Sensor und Zielobjekt deutlich z.B um den Faktor 2 bis 3 im Vergleich zu induktiven Näherungssensoren gleicher Baugröße erhöht ist.

Dabei können zugleich auch gewünschte Designanforderungen eingehalten werden, wie etwa Modenreinheit in einem möglichst großen Frequenzbereich; leichte Ein- oder Auskopplung der elektromagnetischen Wellen in den Resonator; und / oder geringe Wandströme des Sensors an den Grenzflächen zwischen dielektrischem Material und Luft.

Bei einem, mehreren oder allen Ausführungsbeispielen der erfindungsgemäßen Abstandsmessvorrichtung oder des erfindungsgemäßen Abstandsmessverfahrens wird ein Sensor eingesetzt, der z.B. als ein Faktor-1-Sensor ausgebildet sein kann. Ein solcher Sensor kann bei allen Zielen die gleiche Messkurve aufweisen, wenn es sich beispielsweise um Metalle handelt und die Größe der Zielfläche den Durchmesser oder die Sensorfläche des Sensors nicht signifikant unterschreitet.

Dabei kann der Sensor bei einem, mehreren oder allen Ausführungsbeispielen aufgrund besonderer Aufbaustrukturen einen geringen Einbausprung besitzen und ist somit gegenüber den, den Sensor umgebenden Komponenten höhenmäßig nur geringfügig nach oben oder unten oder auch gar nicht versetzt.

Gemäß einem Aspekt der Erfindung wird eine Abstandmessvorrichtung bereitgestellt, die insbesondere für metallische oder dielektrische Zielobjekte einsetzbar ist und einen Sensor mit einem Resonanzraum und einer Resonanzstruktur aufweist, wobei die Resonanzstruktur ein Element aus dielektrischem Material aufweist, das eine randseitige Verengung aufweist. Die Resonanzfrequenz des Resonanzraums ist vom Abstand zwischen dem Element und einem Zielobjekt abhängig.

Die randseitige Verengung kann eine umlaufende, z.B. rotationssymmetrische Verengung z.B. in Form einer Ausnehmung oder Rille sein, die beispielsweise einen rechteckförmigen Querschnitt aufweisen kann.

Das Element kann eckig oder zylindrisch ausgebildet sein.

Die Verengung kann z.B. eine Höhe von 5 bis 25% oder 10 bis 20% oder etwa 15% der Elementhöhe aufweisen, oder 0,2 bis 1,0 mm, oder optional 0,5 bis 0,7 mm, oder etwa 0, 6 mm hoch sein.

Die Verengung kann ferner oder alternativ beispielsweise eine Tiefe von 5 bis 25% oder 10 bis 20% oder etwa 15% der Elementbreite aufweisen, oder 1,0 bis 3,8 mm, oder optional 1,6 bis 3,2 mm, oder etwa 2,4 mm tief sein. Die Verengung kann im oberen Drittel des Elements oberhalb eines oberen Hülsenrands, sofern vorhanden, angeordnet sein.

Der untere Bereich des Elements, optional einschließlich der Randflächen der Verengung, kann ganz, teilweise oder überwiegend metallisiert sein, und es kann der äußere und / oder obere Bereich des Elements mit einem Kunststoff umspritzt sein.

Die Resonanzstruktur des Sensors kann zumindest teilweise in einer Hülse angeordnet sein, und das Element in der Hülse derart positioniert sein, dass sich ein oberer Bereich des Elements teilweise oberhalb der Hülse befindet.

Bei einem, mehreren oder allen Ausführungsbeispielen der Abstandmessvorrichtung kann ein Signalgenerator zur Erzeugung eines optional frequenzmodulierten Signals vorgesehen sein, das in die Resonanzstruktur eingekoppelt wird, wobei an einer anderen Stelle der Resonanzstruktur bei vorhandener Resonanz ein Signal ausgekoppel wird ist.

Die Abstandmessvorrichtung kann Mittel aufweisen, um ein aus der Resonanzstruktur ausgekoppeltes Signal in ein Basisband herunterzumischen, zu verstärken, zu filtern und / oder analog-digital umzuwandeln.

Die Abstandmessvorrichtung kann mindestens einen Oszillator zur Erzeugung eines in die Resonanzstruktur eingekoppelten Signals und eines Lokaloszillatorsignals (LO-Signal), und einen Mischer enthalten, dem das aus der Resonanzstruktur ausgekoppelte Signal und das Lokaloszillatorsignal zuführbar sind.

Die Resonanzstruktur kann derart ausgebildet sein, dass sie elektrisch und / oder magnetisch anregbar ist.

Bei einem oder mehreren Ausführungsbeispielen oder einem weiteren Aspekt der Erfindung kann eine Vorrichtung mit einer Resonanzstruktur geometrisch so ausgelegt sein, dass sich in der Resonanzstruktur ein Mode ausbildet, der zumindest überwiegend die Form eines H111- bzw. TE111- und H011 bzw. TE011-Modes aufweist. Dies kann zur Abstandsmessung, aber auch zu anderen Zwecken, eingesetzt werden.

Ein Mode kann einen Anteil enthalten, dessen Form wie ein TM-Mode ausgeprägt ist.

Die Verengung am Sensorrand kann wie eine Drossel wirken und Kurzschlusseigenschaften in Leerlaufeigenschaften transformieren.

Bei einem oder mehreren Ausführungsbeispielen können zur Erzielung rotationssymmetrischer Sensoreigenschaften mindestens zwei Resonatoreinkopplungspunkte vorgesehen sein, die geometrisch um einen bestimmten Winkel oder Abstand versetzt sein können. In die mindestens zwei Resonatoreinkopplungspunkte können Signale mit einer bestimmten Phasendifferenz von beispielsweise 90 , optional mit der gleichen Amplitude, einspeisbar sein, so dass sich ein Zirkulieren des Modes ergibt.

Mit einem weiteren Aspekt der Erfindung ist ein Abstandmessverfahren, insbesondere für metallische oder dielektrische Zielobjekte bereitgestellt, mit einem Sensor, der einen Resonanzraum und eine Resonanzstruktur aufweist,
wobei die Resonanzstruktur ein Element aus dielektrischem Material aufweist, das eine randseitige Verengung aufweist, wobei eine Resonanzfrequenz des Resonanzraums vom Abstand zwischen dem Element und einem Zielobjekt abhängig ist. In die Resonanzstruktur kann ein Signal an einer Stelle eingespeist und an einer anderen Stelle der Resonanzstruktur bei vorhandener Resonanz ein Signal ausgekoppelt werden.

Bei einem Verfahren, z.B. einem Abstandmessverfahren, wird eine oder die Resonanzstruktur geometrisch so ausgelegt, dass sich in der Resonanzstruktur ein Mode ausbildet, der zumindest überwiegend die Form eines H011- bzw. TE011- und / oder H111 bzw. TE111-Modes aufweist.

Eine rotationssymmetrische Sensoreigenschaft kann dadurch erzielt werden, dass ein Signal über einen ersten Resonatoreinkopplungspunkt eingespeist und über einen zweiten, versetzt zum ersten angeordneten Resonatoreinkopplungspunkt ausgekoppelt wird. Wenn in die mindestens zwei Resonatoreinkopplungspunkte bzw. Resonatorankopplungspunkte Signale mit einer Phasendifferenz von beispielsweise 90 , optional mit der gleichen Amplitude, eingespeist werden, ergibt sich ein Zirkulieren des Modes.

Die Erfindung wird nachstehend anhand von in den Zeichnungen dargestellten Ausführungsbeispielen näher beschrieben.
Fig. 1 zeigt ein Blockschaltbild eines Ausführungsbeispiels einer erfindungsgemäßen Abstandsmessvorrichtung;
Fig. 2 zeigt eine Schnittansicht einer Ausführungsform einer bei der erfindungsgemäßen Abstandsmessvorrichtung oder Abstandsmessung einsetzbaren Resonatorstruktur;
Fig. 3 zeigt Modenanteile bei der Resonatorstruktur gemäß Fig. 2;
Fig. 4 zeigt ein Blockschaltbild eines Ausführungsbeispiels einer mit zirkularem Mode arbeitenden, erfindungsgemäßen Abstandsmessvorrichtung;
Fig. 5 zeigt eine vereinfachte Darstellung des zirkularen bzw. zirkulierenden Modes;
Fig. 6 zeigt einen Frequenzgang der Resonanzfrequenz über dem Zielabstand; und
Fig. 7 bis 23 zeigen Simulationsaufbauten- und -ergebnisse sowie Frequenzkurven und Feldverläufe bei Ausführungsbeispielen der erfindungsgemäßen Abstandsmessvorrichtung.

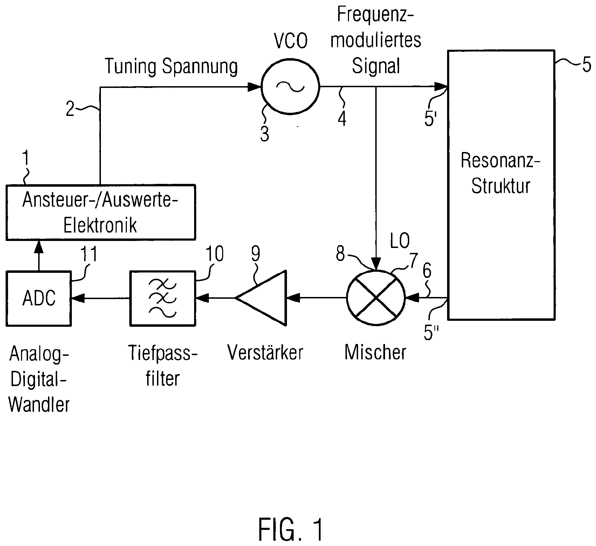

Das Prinzip des Sensors besteht bei einem, mehreren oder allen Ausführungsbeispielen entsprechend Fig. 1 darin, die Frequenz von einem Resonanzraum zu bestimmen, der durch eine im Sensor befindliche Resonanzstruktur und ein Ziel, das einen bestimmten, im folgenden auch als Zielabstand bezeichneten, zu erfassenden Abstand zum Sensor aufweist, definiert wird.

Der Zielabstand kann aufgrund der Abhängigkeit der Resonanzfrequenz vom Zielabstand bestimmt werden. Die Resonanzstruktur kann dabei mit einem frequenzmodulierten Signal eingekoppelt oder beaufschlagt werden, und es kann an einer anderen Stelle der Resonanzstruktur bei vorhandener Resonanz ein Signal ausgekoppelt werden. Das ausgekoppelte Signal kann dann in das Basisband heruntergemischt, verstärkt, gefiltert und / oder analog-digital gewandelt werden.

Wie in Fig. 1 gezeigt ist, ist bei dem dargestellten Ausführungsbeispiel eine Ansteuer-/Auswerteeinrichtung 1, z.B. in Form einer Elektronikschaltung, vorhanden, die über eine Leitung 2 ein Steuersignal, z.B: in Form einer Tuning-Spannung, an einen spannungsgesteuerten Oszillator, VCO, 3 anlegt. Das vom VCO 3 ausgegebene frequenzmodulierte Signal wird über eine Leitung 4 an einen Eingangsanschluss 5' einer Resonanzstruktur 5 als Erregungssignal angelegt.

Von der Resonanzstruktur 5 wird an einem anderen Anschluss 5" ein Ausgangssignal abgenommen, das über eine Leitung 6 an einen Mischer 7 angelegt wird, dem über einen zweiten Eingang 8 das auf der Leitung 4 auftretende, in die Resonanzstruktur 5 eingespeiste Signal als Lokaloszillatorsignal zugeführt wird.

Das Ausgangssignal des Mischers 7 wird bei einem, mehreren oder allen Ausführungsbeispielen über einen Verstärker 9, ein Tiefpassfilter 10 und / oder einen Analog-Digital-Wandler 11 geführt und danach über einen Eingang in die Ansteuer- und Auswerteeinrichtung 1 eingespeist.

Das an den Eingang 8 des Mischers 7 angelegte Lokaloszillatorsignal (LO-Signal) kann bei manchen Ausführungsbeispielen durch einen anderen Oszillator als der VCO 3 generiert werden, wird aber beim Ausführungsbeispiel gemäß Fig. 1 und weiteren Ausführungsbeispielen von demselben Oszillator 3 erzeugt wie das Einkoppelsignal am Eingang 5. Dieses Mischprinzip ermöglicht dabei Amplitudensensitivität und verhindert Mehrdeutigkeiten bei Resonanzfrequenzen und Einkopplungen durch sich gegenüber befindliche, baugleiche Sensoren.

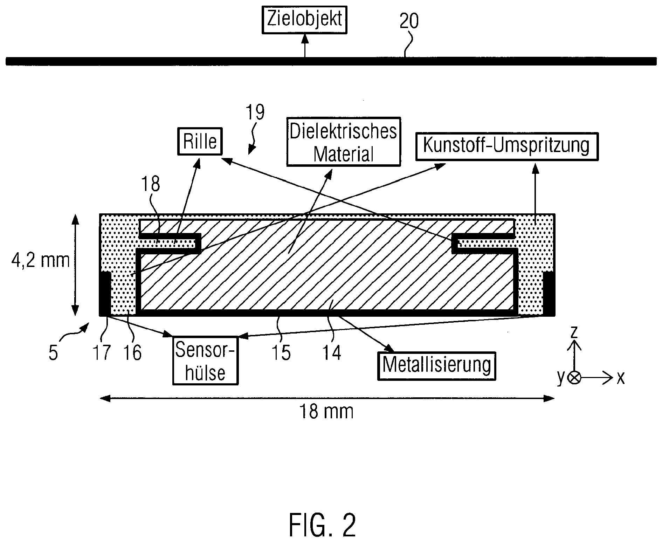

Der Sensor kann bei einem, mehreren oder allen Ausführungsbeispielen folgendermaßen aufgebaut sein. Der Sensor weist eine Resonanzstruktur 5 entsprechend der Darstellung in Fig. 2 auf, wobei sich die Abmessungen hierbei auf typische Maße eines Sensors der Größe M18 (metrisches ISO-Gewinde als Gewindegröße bei einem einschraubbaren Sensor) beziehen und je nach Bedarf und Größe entsprechend beliebig abgewandelt oder variiert werden können. Bei dem dargestellten Ausführungsbeispiel ist der Sensor als runde Scheibe mit einer Dicke von ca. 4,2 mm und einem Durchmesser von 18 mm ausgeführt.

Die Resonanzstruktur 5 besteht bei dem dargestellten Ausführungsbeispiel hauptsächlich aus einem Element 14 aus dielektrischem Material mit optional zylindrischer Form, einem Zielobjekt 20 und einem Luftbereich 19 zwischen beiden Objekten 14, 20. Mit dieser Anordnung können bei kleinen geometrischen Verhältnissen hohe Resonanzfrequenzen erzielt werden.

Das dielektrische Material des Elements 14 weist bei den Ausführungsbeispielen eine Verengung 18, beispielsweise eine umlaufende, randseitige und / oder rotationssymmetrische Verengung, in Form einer Vertiefung oder Aussparung wie etwa einer seitenrandseitigen Rille auf. Der untere Bereich des Elements 14 ist überwiegend oder vollständig metallisiert, d.h. weist eine Metallisierung 15 auf. Gegebenenfalls können auch die unteren Seitenflächen des Elements 14 und / oder die Grenzflächen der Verengung 18, also die parallel zur Unterseite des Sensors 5 verlaufenden Oberflächen und die innere, rechtwinklig hierzu verlaufende Randseite der Ausnehmung 18 überwiegend oder vollständig metallisiert sein, d.h. die Metallisierung 15 aufweisen. Das Element 14 ist mit einem Kunststoff 16 wie etwa einem Harz umgeben, z.B. umspritzt, der nicht nur alle Seitenbereiche des Elements einschließlich des Inneren der Ausnehmung 18, sondern auch mit kleinerer Schichtdicke die Oberseite des Elements 14 bedeckt.

Das Element 14 ist im unteren Bereich von einer Sensorhülse 17 umgeben, und befindet sich im oberen Bereich teilweise oberhalb der Sensorhülse 17. Die Höhe der Sensorhülse kann z.B. ein bis zwei Drittel der Elementhöhe betragen, endet aber optional unterhalb der Ausnehmung 18 und kann beispielsweise etwa die Hälfte der Höhe des Elements 14 aufweisen.

Die Verengung 18 kann bei einem, mehreren oder allen Ausführungsbeispielen einen rechteckförmigen Querschnitt aufweisen, wobei die Verengung eine Höhe von 5 bis 25% oder 10 bis 20% oder etwa 15% der Elementhöhe aufweisen kann, oder z.B. 0,2 bis 1,0 mm, oder optional 0,5 bis 0,7 mm, oder etwa 0,6 mm hoch sein kann.

Die Verengung 18 kann des Weiteren eine Tiefe von 5 bis 25% oder 10 bis 20% oder etwa 15% der Elementbreite aufweisen, oder z.B. 1,0 bis 3,8 mm, oder optional 1,6 bis 3,2 mm, oder etwa 2,4 mm tief sein.

Die Verengung 18 ist bei dem dargestellten Ausführungsbeispiel am Außenrand ausgebildet und z.B. in der oberen Hälfte oder im oberen Drittel des Elements 14 angeordnet.

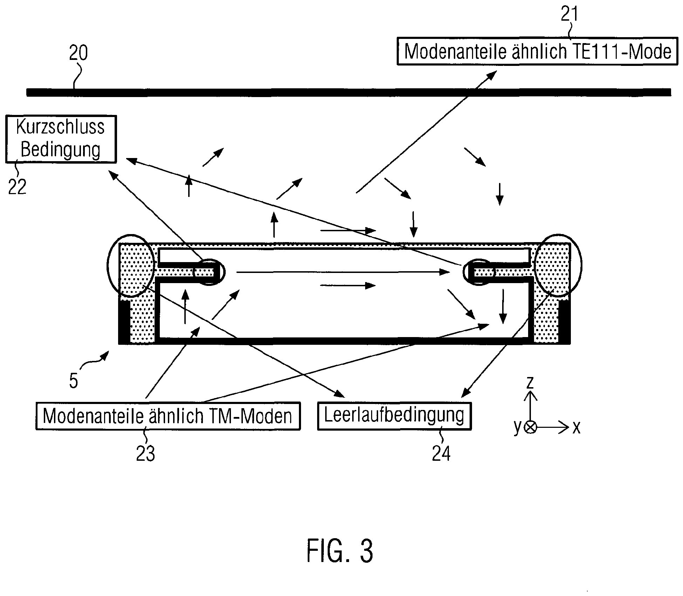

Die Resonanzstruktur 5 wird elektrisch oder magnetisch angeregt und ist geometrisch so ausgelegt, dass sich entsprechend Fig. 3 in der Resonanzstruktur 5 ein Mode ausbildet, der überwiegend die Form eines TE111-Modes aufweisen kann. Zusätzlich besitzt der Mode einen Anteil, dessen Form wie ein TM-Mode ausgeprägt ist. Das elektrische Feld im Resonator 5 bildet an der z-Position der Rille (also der oberen horizontalen Grenzfläche der Ausnehmung 18 gemäß der Darstellung in den Zeichnungen) sein betragsmäßig stärkstes Feld aus. Zugleich bilden sich die Wandströme hauptsächlich am Rand des Elements 14, d.h. des dielektrischen Materials auf der Innenseite der Rille bzw. Ausnehmung 18 aus. Dadurch werden störende Wandströme an der Sensoroberfläche verhindert. Nach außen, zum Sensorrand, wirkt die Ausnehmung 18 (Rille) wie eine Drossel und transformiert Kurzschlusseigenschaften in Leerlaufeigenschaften, die Feldanteile um den Sensorkopf herum minimieren. Diese werden zusätzlich dadurch reduziert, dass sich unterhalb der Ausnehmung 18 die E-Moden-artigen Anteile ausbilden.

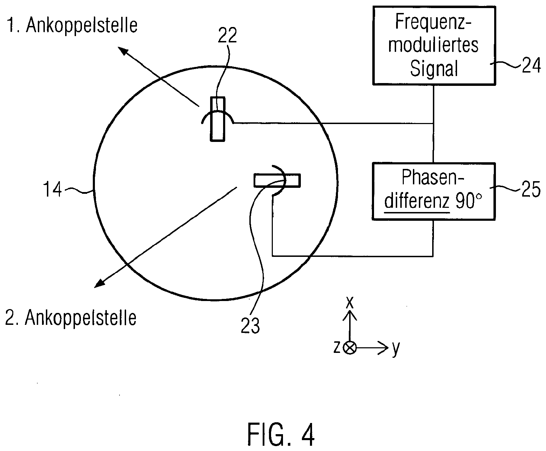

Bei einem, mehreren oder allen Ausführungsbeispielen können rotationssymmetrische Sensoreigenschaften durch Zirkulieren des oben beschriebenen Modes erreicht werden. Dazu sind entsprechend Fig. 4 mindestens zwei Resonatoreinkopplungspunkte 22, 23 vorgesehen, die geometrisch um 90 versetzt sind und deren Signale mit der gleichen Amplitude, jedoch mit einer Phasendifferenz von 90° eingespeist werden. Figur 4 zeigt eine Unteransicht des Elements 14, also in z-Richtung, wie dies durch die Koordinatenpfeile angezeigt ist. Das vom VCO 3 erzeugte frequenzmodulierte Signal 24 wird direkt an die erste Ankoppelstelle 22 sowie an einen 90°-Phasenschieber 25 angelegt, dessen um 90° verschobenes Ausgangssignal an die zweite Ankoppelstelle 23 angelegt ist.

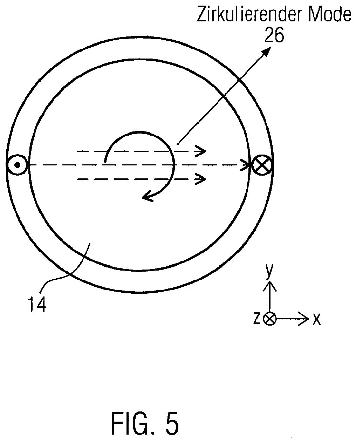

Entsprechend Fig. 5 bildet sich somit ein rechts- bzw. linkszirkularer Mode 26. Fig. 5 zeigt eine Draufsicht auf das Element 14.

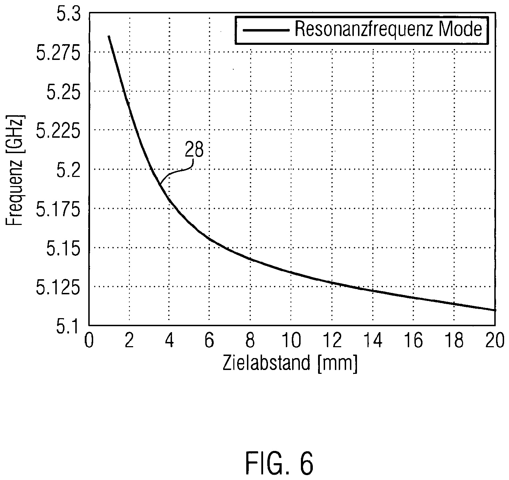

Fig. 6 zeigt beispielhaft für die Anordnung gemäß Fig. 2 eine Frequenzkurve 28, die die Veränderung der Resonanzfrequenz bei Veränderung des Zielabstands eines metallischen Ziels 20 veranschaulicht. Besonderes Merkmal-der Kurve 28 ist eine-verhältnismäßig lineare konstante Frequenzveränderung über den Zielabstand. Dies ist bedingt durch den verwendeten Mode, der hauptsächlich aus E-Moden-artigen Anteilen und aus H111-Moden-artigen Anteilen besteht. Letztere Anteile sind stärker ausgeprägt und für die Resonanzfrequenzveränderung über den Zielabstand maßgeblich und aufgrund der Feldstruktur und der relativ niedrigen Resonanzfrequenz besonders gut für Messungen auch bei großen Abständen geeignet.

In Fig. 6 ist auf der Abszisse der Zielabstand in mm, und auf der Ordinate die Frequenz in GHz aufgetragen.

Dabei können, wie aus Fig. 6 erkennbar ist, Abstandsmessungen für die Sensorgröße M18 in einem sehr weiten Bereich von weniger als 1 mm bis zu mehr als 20mm zuverlässig ausgeführt werden.

Ein weiterer Vorteil des Sensors ist die Abstandmessung zu dielektrischen Zielen. Dabei dringen Feldanteile in das dielektrische Ziel ein und es ergibt sich aufgrund der höheren Feldkonzentration im Ziel und dem Permittivitätsunterschied zwischen Luft und dem Ziel eine Resonanzfrequenzverschiebung über den Zielabstand, die sich von metallischen Zielen unterscheidet. Dieser Effekt ist abhängig von der Permittivitätszahl, der Dicke und den Hochfrequenzeigenschaften des Materials und kann zur Abstandsmessung oder zur Materialbestimmung verwendet werden.

Bei einem, mehreren oder allen Ausführungsbeispielen kann eine oder die Resonanzstruktur geometrisch so ausgelegt sein, dass sich in der Resonanzstruktur ein Mode ausbildet, der zumindest überwiegend die Form eines H111-Modes aufweist. Durch den H111-Mode wird ein neuartiges Generator- oder Messprinzip mit sehr großer Reichweite geschaffen.. Dies Generator- oder Messprinzip kann für eine Messvorrichtung, z.B. eine Abstandmessvorrichtung oder Abstandsmessung, aber auch für andere Zwecke verwendet werden. Bekanntlich handelt es sich bei H und E Moden um die deutschen Bezeichnungen, wohingegen TM und TE die entsprechenden amerikanische Bezeichnungen sind, so dass z.B. "H111 = TE111", "E110 = TM110" gilt.

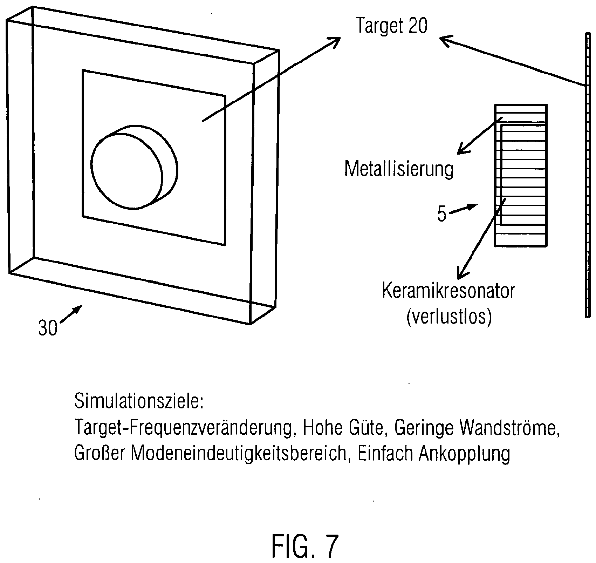

Fig. 7 bis 23 zeigen Simulationsaufbauten- und -ergebnisse für eine Resonanzstruktur 5 bei Ausführungsbeispielen der erfindungsgemäßen Abstandsmessvorrichtung, wie etwa einen Keramikresonator, z.B. in einem Dimmer 30, mit Resonanzfrequenz, Güte und Schaltabstand sowie Frequenzkurven und Feldverläufe.

Fig. 7 listet die Simulationsziele wie Target_Frequenzveränderung, Hohe Güte, Geringe Wandströme, Großer Modeneindeutigkeitsbereich, und Einfache Ankopplung auf.

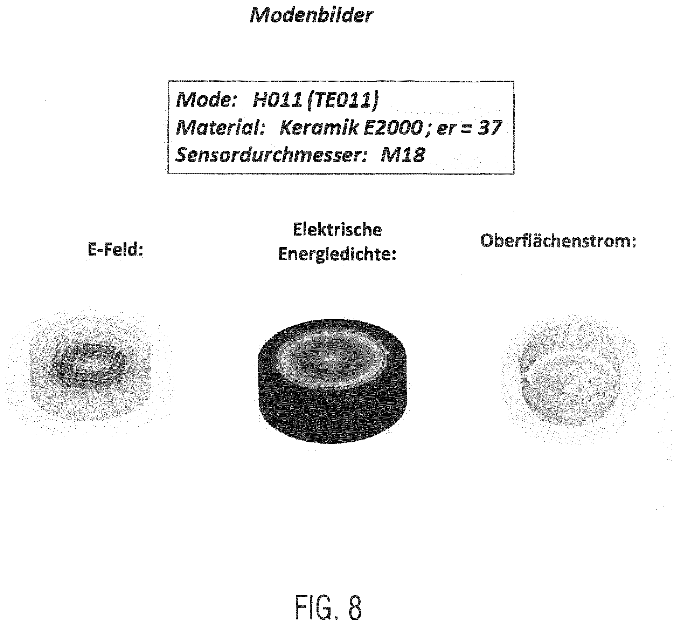

Fig. 8 zeigt Modenbilder für H011 mit E-Feld, Elektrischer Energiedichte und Oberflächenstrom.

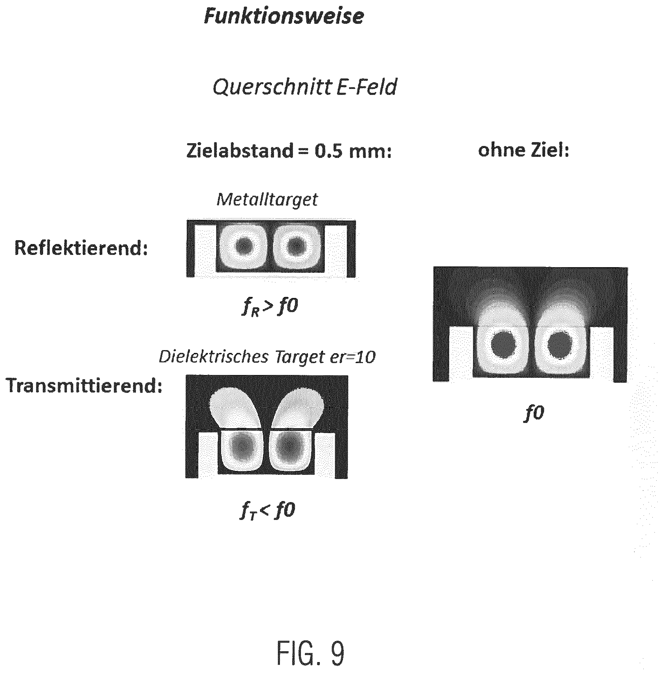

Fig. 9 zeigt die Funktionsweise mit reflektierendem oder transmittierendem Target bzw. ohne Target. Das Target ist auch hier als Ziel bzw. Zielobjekt zu verstehen.

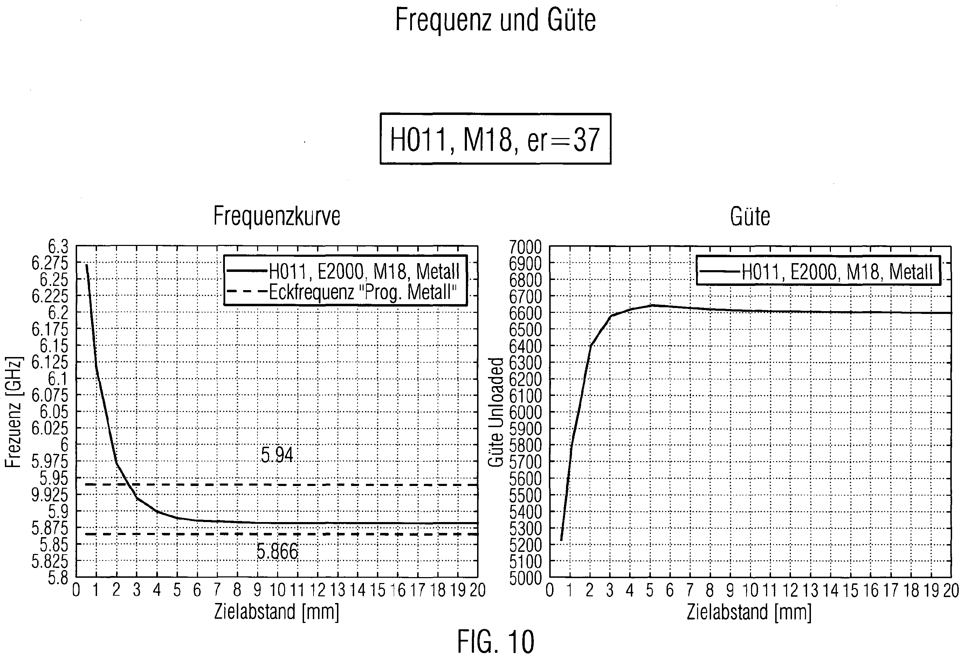

Fig. 10 veranschaulicht Frequenz und Güte in Form von Kurven über den Zielabstand.

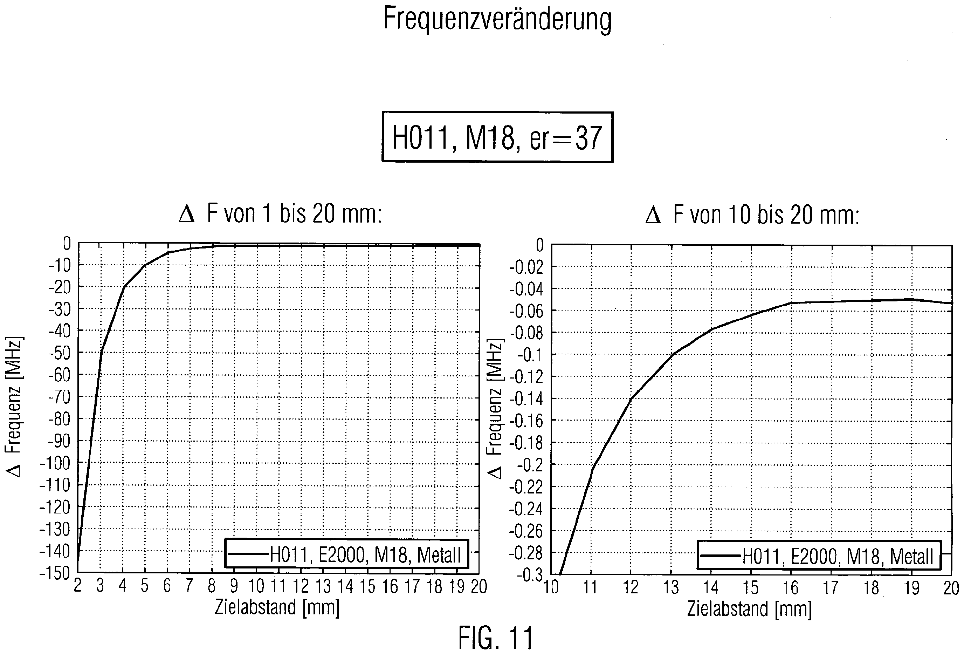

Fig. 11 veranschaulicht Frequenzveränderungen in Form von Kurven über den Zielabstand.

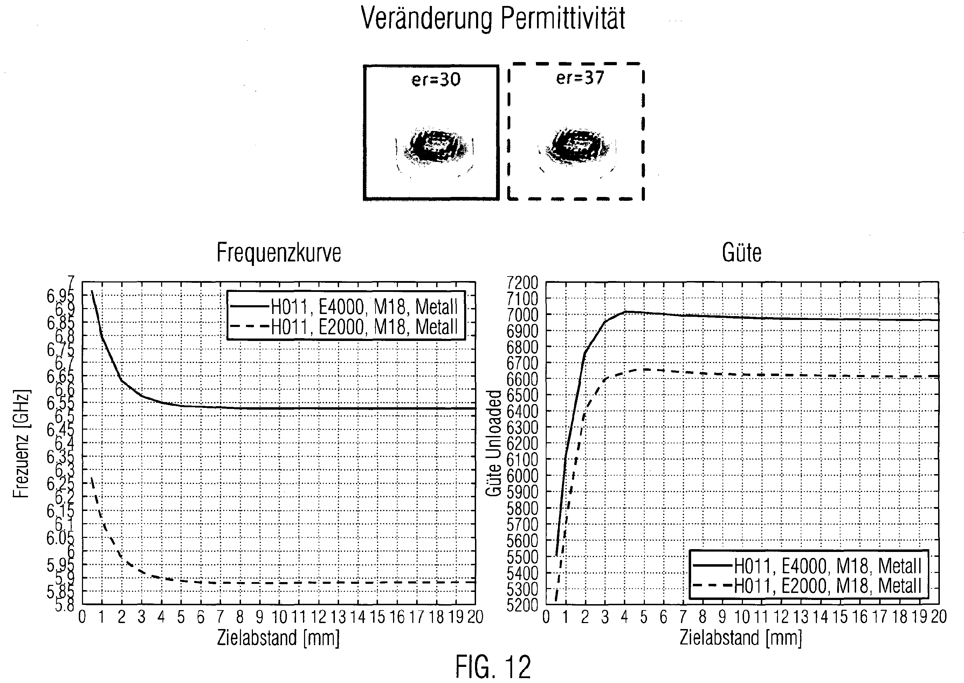

Fig. 12 betrifft die Veränderung der Permittivität in Form von Frequenz- und Gütekurven über den Zielabstand.

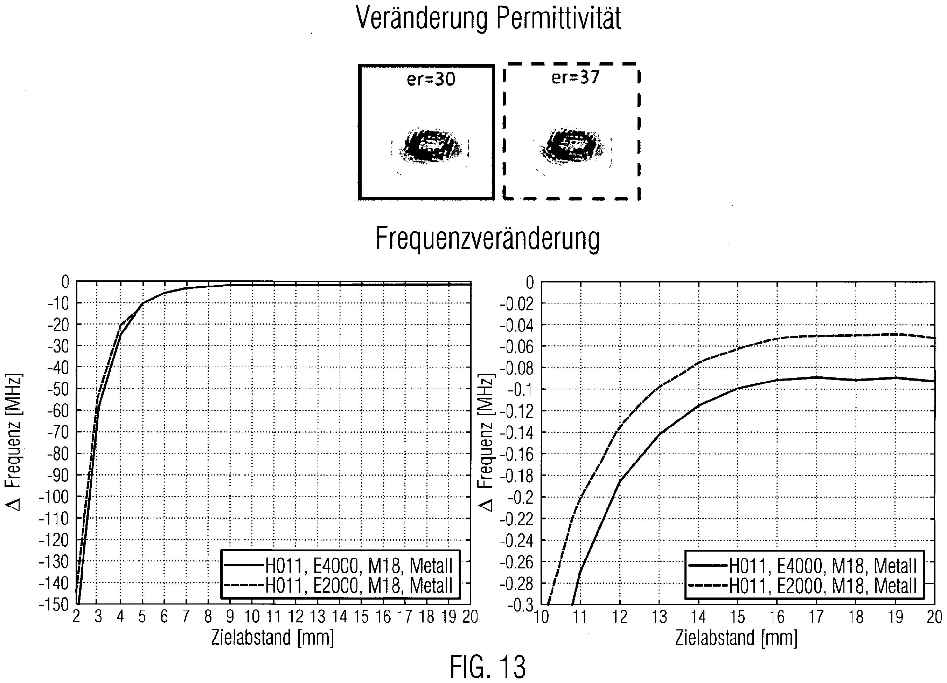

Fig. 13 zeigt die Veränderung der Permittivität in Form von Frequenzveränderungskurven über den Zielabstand.

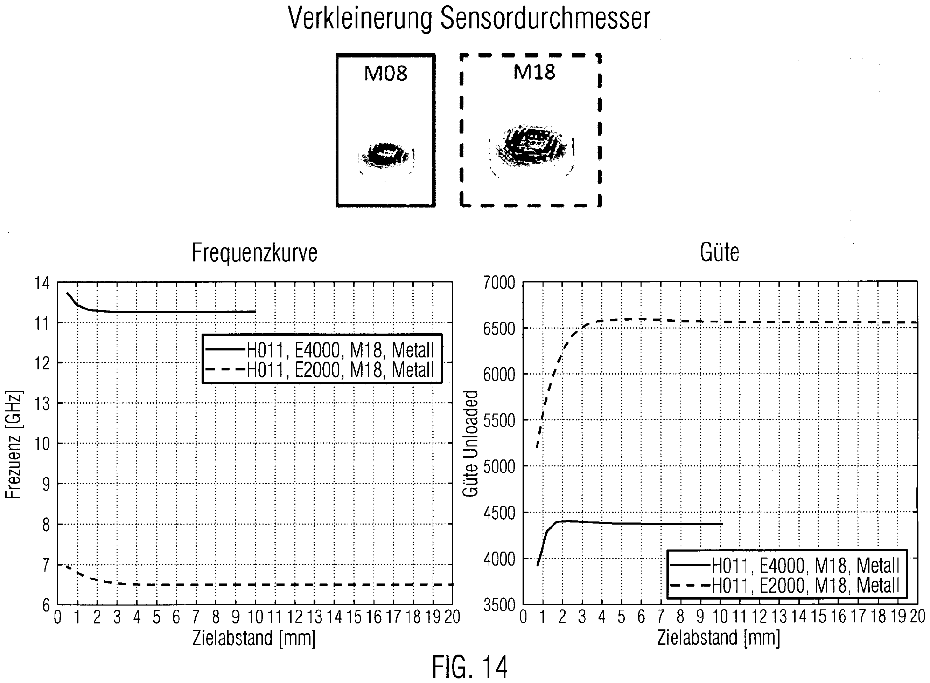

Fig. 14 veranschaulicht Auswirkungen bei Verkleinerung des Sensordurchmessers hinsichtlich Frequenzkurve und Güte-Kurven über den Zielabstand.

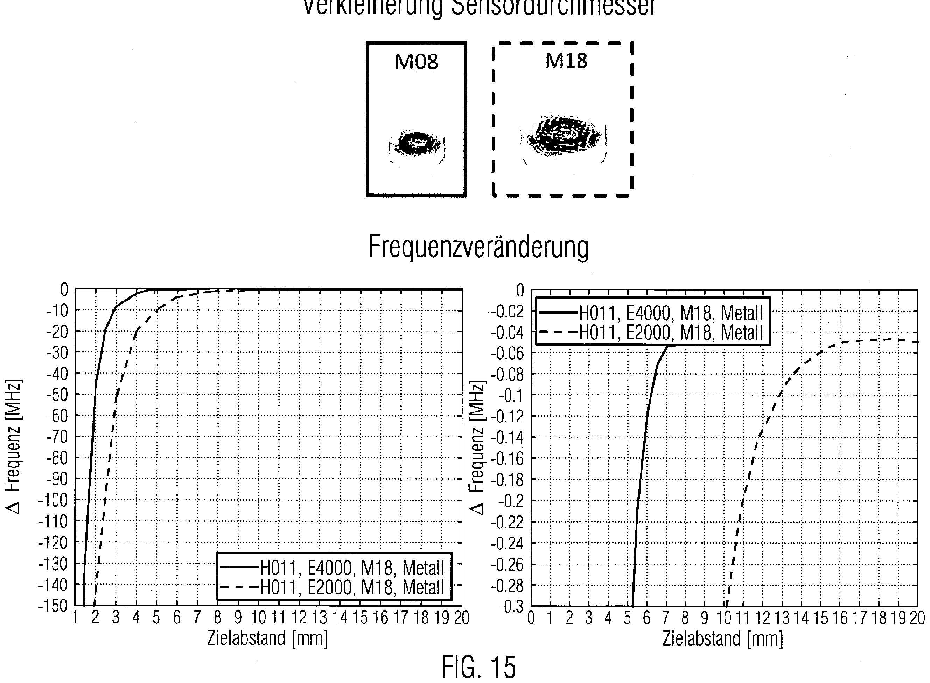

Fig. 15 veranschaulicht Auswirkungen bei Verkleinerung des Sensordurchmessers hinsichtlich Frequenzveränderungen über den Zielabstand.

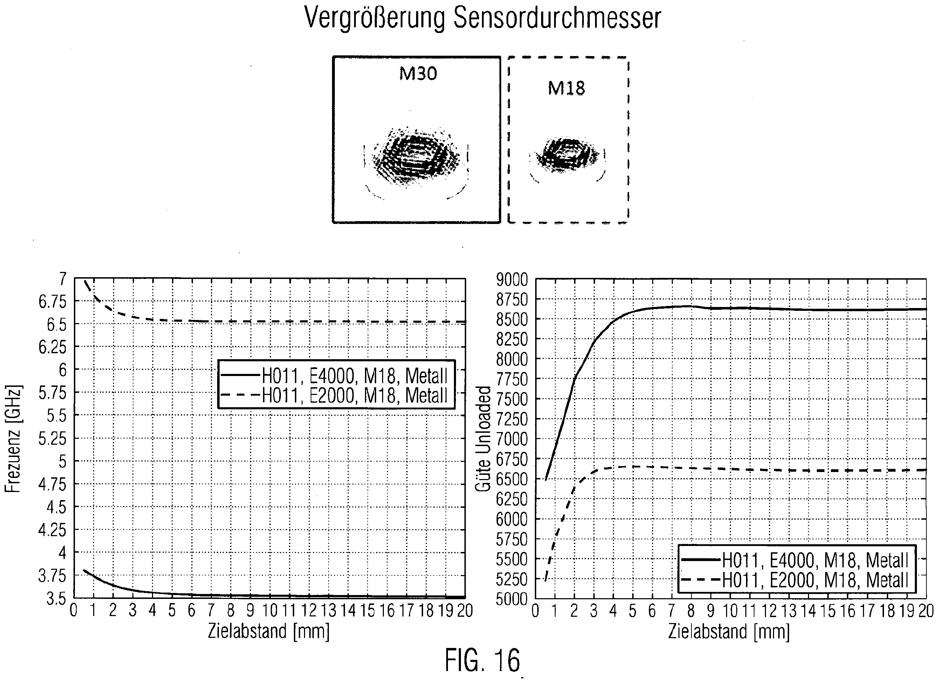

Fig. 16 veranschaulicht Auswirkungen bei Vergrößerung des Sensordurchmessers hinsichtlich Frequenzkurve und Güte-Kurve (unbelastet) über den Zielabstand.

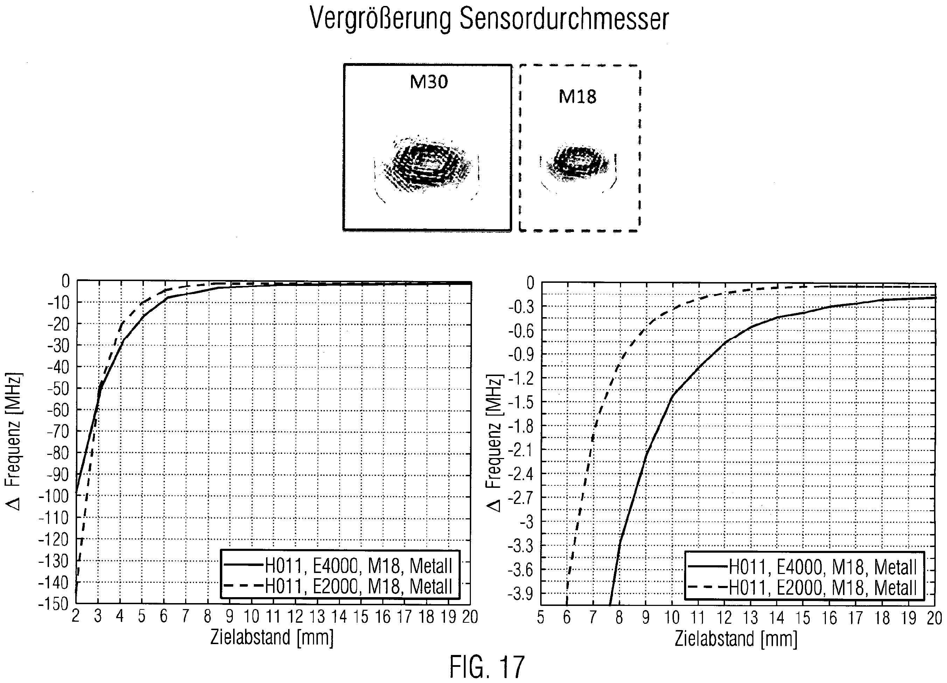

Fig. 17 veranschaulicht Auswirkungen bei Vergrößerung des Sensordurchmessers hinsichtlich Frequenzveränderungen und Moden.

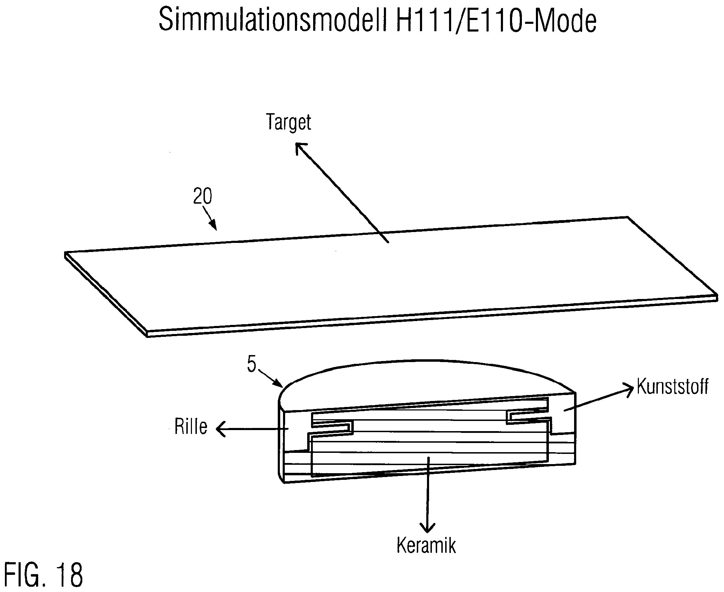

Fig. 18 zeigt ein Simulationsmodell mit Target und Resonanzstruktur für den H111/E110-Mode.

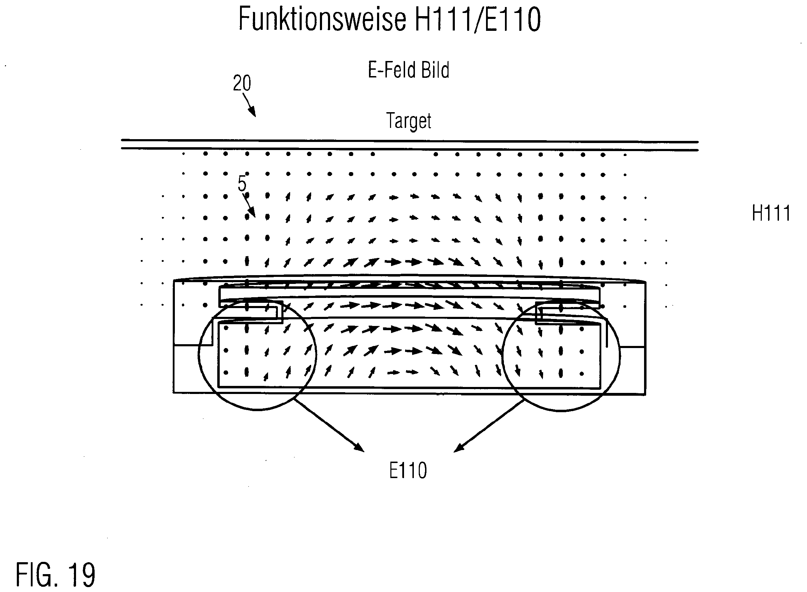

Fig. 19 zeigt eine Funktionsweise in Form des E-Feld-Bilds bei H111/E110 Mode mit Target und Resonanzstruktur.

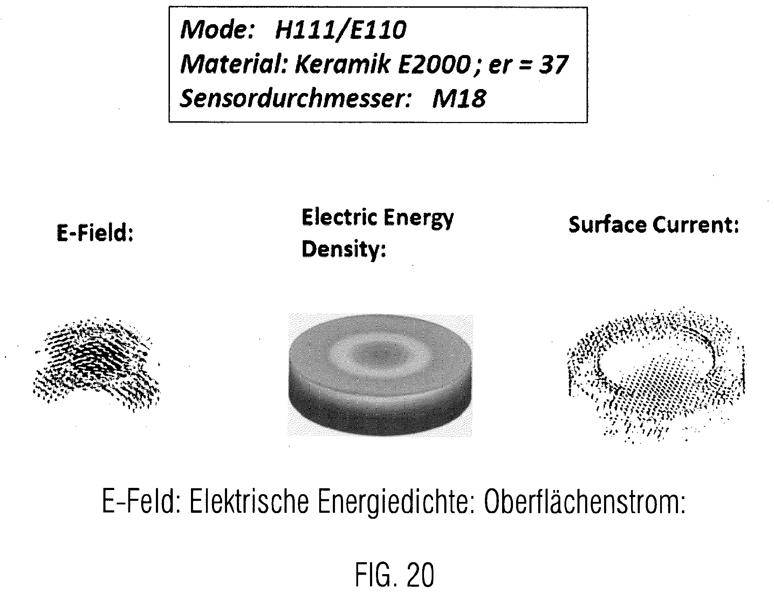

Fig. 20 zeigt Modenbilder für H111/E110 mit E-Feld, Elektrischer Energiedichte und Oberflächenstrom.

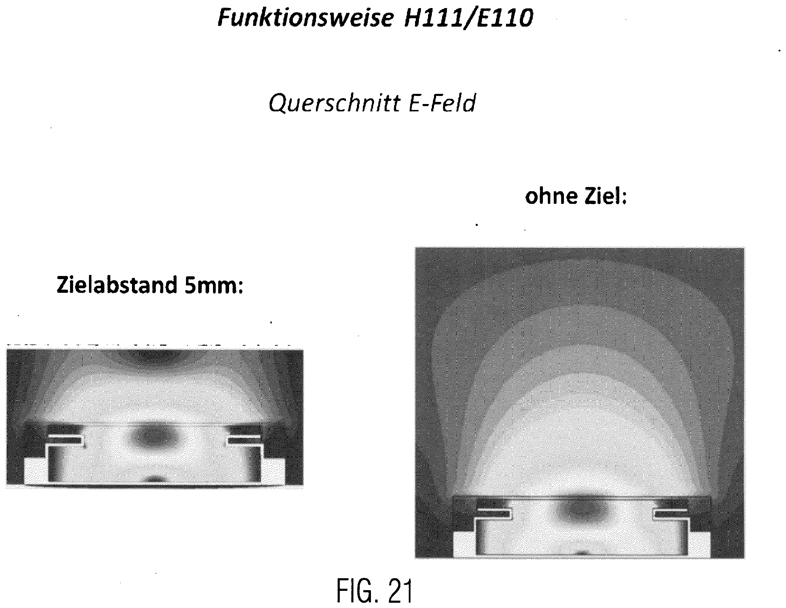

Fig. 21 zeigt Querschnitte des E-Felds bei Zielabstand 5mm als Beispiel bzw. ohne Ziel.

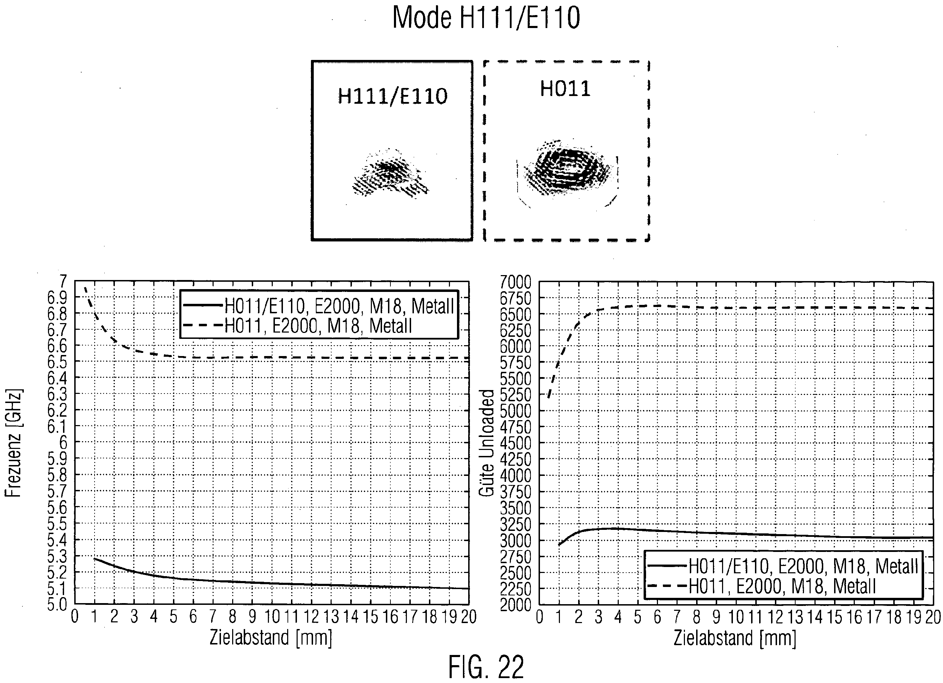

Fig. 22 veranschaulicht eine Frequenzkurve und Güte-Kurve (unbelastet) über den Zielabstand für den H111/E110-Mode.

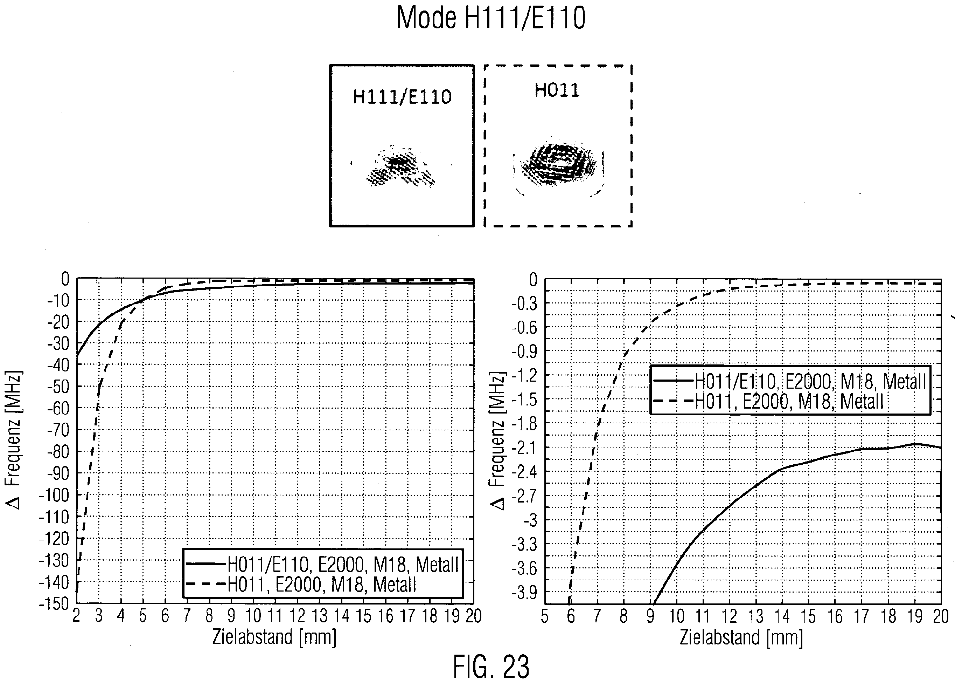

Fig. 23 veranschaulicht Frequenzveränderungskurven über den Zielabstand für den H111/E110-Mode.

Da diese Zeichnungen im übrigen aus sich selbst heraus verständlich und als eigenständige Offenbarung tauglich und zu verstehen sind, entfällt eine nähere Beschreibung derselben.

## Patentansprüche

1. Abstandmessvorrichtung, zum Messen von metallischen oder dielektrischen Zielobjekten (20), aufweisend:
einen Sensor, der einen Resonanzraum und eine Resonanzstruktur (5) aufweist, wobei die Resonanzstruktur ein Element (14) aus dielektrischem Material aufweist, wobei das Element eckig oder zylindrisch ist, und eine Unterseite, eine Oberseite und Seitenflächen aufweist, wobei die Seitenflächen senkrecht zur Unterseite und zur Oberseite sind, und wobei die Seitenflächen eine randseitige Verengung (18) in Form einer Vertiefung oder Aussparung aufweisen, und wobei eine Resonanzfrequenz des Resonanzraums vom Abstand zwischen dem Element und einem Zielobjekt abhängig ist, wobei die Unterseite des Elements (14), optional einschließlich der Randflächen der Verengung (18), ganz, teilweise oder überwiegend metallisiert ist, wobei der Sensor eine Kunststoff-Umspritzung aufweist, die das Element (14) umgibt, und wobei der Sensor eine Sensorhülse (17) aufweist, in der die Resonanzstruktur (5) angeordnet ist, wobei sich ein oberer Bereich des Elements (14) oberhalb der Sensorhülse befindet, wobei die Abstandsmessvorrichtung so angepasst ist, ein Signal in die Resonanzstruktur einzukoppeln, ein zweites Signal bei vorhandener Resonanz aus der Resonanzstruktur auszukoppeln, und aus der Frequenz des zweiten Signals den Abstand zum Zielobjekt herzuleiten.

2. Abstandsmessvorrichtung nach Anspruch 1, wobei die randseitige Verengung (18) eine umlaufende, rotationssymmetrische Verengung ist und/oder vorzugsweise die randseitige Verengung (18) in Form einer Ausnehmung oder Rille ausgebildet ist und/oder vorzugsweise die Verengung (18) einen rechteckförmigen Querschnitt aufweist.

3. Abstandsmessvorrichtung nach einem der vorhergehenden Ansprüche, wobei die Verengung (18) eine Höhe von 5 bis 25% oder 10 bis 20% oder 15% der Elementhöhe aufweist, oder 0,2 bis 1,0 mm, oder optional 0,5 bis 0,7 mm, oder 0,6 mm hoch ist und/oder vorzugsweise die Verengung (18) eine Tiefe von 5 bis 25% oder 10 bis 20% oder 15% der Elementbreite aufweist, oder 1,0 bis 3,8 mm, oder optional 1,6 bis 3,2 mm, oder 2,4 mm tief ist.

4. Abstandsmessvorrichtung nach einem der vorhergehenden Ansprüche, mit Mitteln, um ein aus der Resonanzstruktur (5) auskoppelbares Signal in ein Basisband herunterzumischen, zu verstärken, zu filtern und / oder analog-digital umzuwandeln und/oder vorzugsweise mit einem Oszillator (3) zur Erzeugung eines in die Resonanzstruktur (5) eingekoppelten Signals und eines Lokaloszillatorsignals (LO-Signal), und mit einem Mischer, dem das aus der Resonanzstruktur ausgekoppelte Signal und das Lokaloszillatorsignal zuführbar sind und/oder vorzugsweise die Resonanzstruktur (5) derart ausgebildet ist, dass sie elektrisch und / oder magnetisch anregbar ist und/oder vorzugsweise eine oder die Resonanzstruktur (5) geometrisch so ausgelegt ist, dass sich in der Resonanzstruktur ein Mode ausbildet, der zumindest überwiegend die Form eines H111- und / oder TE011 - und / oder TE111-Modes aufweist und/oder vorzugsweise ein oder der Mode einen Anteil enthält, dessen Form wie ein TM-Mode vorzugsweise TM110-Mode bzw. E110-Mode ausgeprägt ist.

5. Abstandsmessvorrichtung nach einem der vorhergehenden Ansprüche, wobei die Verengung (18) am Sensorrand so angepasst ist, dass sie wie eine Drossel wirkt und Kurzschlusseigenschaften in Leerlaufeigenschaften transformiert.

6. Abstandsmessvorrichtung nach einem der vorhergehenden Ansprüche, wobei die Abstandsmessvorrichtung zur Erzielung rotationssymmetrischer Sensoreigenschaften mindestens zwei Resonatoreinkopplungspunkte aufweist.

7. Abstandsmessvorrichtung nach Anspruch 6, wobei die mindestens zwei Resonatoreinkopplungspunkte geometrisch um 90° versetzt sind.

8. Abstandsmessvorrichtung nach Anspruch 6 oder 7, wobei in die mindestens zwei Resonatoreinkopplungspunkte Signale mit einer Phasendifferenz von 90°, optional mit der gleichen Amplitude, einspeisbar sind, so dass sich ein Zirkulieren des Modes ergibt.

9. Abstandmessverfahren zum Messen von metallischen oder dielektrischen Zielobjekten (20), mit einem Sensor, der einen Resonanzraum und eine Resonanzstruktur (5) aufweist, wobei die Resonanzstruktur ein Element (14) aus dielektrischem Material aufweist, wobei das Element eckig oder zylindrisch ist, und eine Unterseite, eine Oberseite und Seitenflächen aufweist, wobei die Seitenflächen senkrecht zur Unterseite und zur Oberseite sind, und wobei die Seitenflächen eine randseitige Verengung (18) in Form einer Vertiefung oder Aussparung aufweisen, und wobei eine Resonanzfrequenz des Resonanzraums vom Abstand zwischen dem Element und einem Zielobjekt abhängig ist, wobei die Unterseite des Elements (14), optional einschließlich der Randflächen der Verengung (18), ganz, teilweise oder überwiegend metallisiert ist, wobei der Sensor eine Kunststoff-Umspritzung aufweist, die das Element (14) umgibt, und eine Sensorhülse (17), in der die Resonanzstruktur (5) angeordnet ist, wobei sich ein oberer Bereich des Elements (14) oberhalb der Sensorhülse befindet, wobei die Abstandsmessvorrichtung so angepasst ist, ein Signal in die Resonanzstruktur einzukoppeln, ein zweites Signal bei vorhandener Resonanz aus der Resonanzstruktur auszukoppeln, und aus der Frequenz des zweiten Signals den Abstand zum Zielobjekt herzuleiten.

10. Abstandsmessverfahren nach Anspruch 9, wobei eine oder die Resonanzstruktur (5) geometrisch so ausgelegt wird, dass sich in der Resonanzstruktur ein Mode ausbildet, der zumindest überwiegend die Form eines H111- und / oder TE011- und / oderTE111-Modes aufweist.

11. Abstandsmessverfahren nach einem der Ansprüche 9 oder 10, wobei eine rotationssymmetrische Sensoreigenschaften dadurch erzielt wird, dass ein Signal über einen ersten Resonatorankopplungspunkt eingespeist und über einen zweiten, versetzt zum ersten angeordneten Resonatorankopplungspunkt ausgekoppelt wird.

12. Abstandsmessverfahren nach Anspruch 11, wobei in die mindestens zwei Resonatoreinkopplungspunkte Signale mit einer Phasendifferenz von beispielsweise 90°, optional mit der gleichen Amplitude, eingespeist werden, so dass sich ein Zirkulieren des Modes ergibt.

## Claims

1. A distance measuring device for measuring metallic or dielectric target objects, comprising:
a sensor having a resonance chamber and a resonance structure (5), wherein the resonance structure has an element (14) of a dielectric material, wherein the element is angular or cylindrical in form, and having a lower side, an upper side and side edges, wherein the side edges run at right angles to the lower side and the upper side, and wherein the side edges have a narrowing (18) in the form of an indentation or a recess, and wherein a resonance frequency of the resonance chamber is dependent on the distance between the element and a target object, wherein the lower side of the element (14), optionally including the edge surfaces of the narrowing (18), is entirely, partially or predominantly metallized, and wherein the sensor comprises an injection moulded plastic positioned around it, which plastic covers the element (14), and wherein the sensor has a sensor sleeve (17) in which the resonance structure (5) is disposed, wherein an upper region of the element (14) is located above the sensor sleeve, wherein the distance measuring device is configured to couple a signal into the resonance structure, to decouple a second signal from the resonance structure with the given resonance, and to determine the distance to the target object dependent on the resonance of the second signal.

2. The distance measuring device according to claim 1, wherein the narrowing (18) at the side edges is circumferential and rotationally symmetrical narrowing and/or preferably the narrowing (18) at the side edges defines a recess or a groove and/or the narrowing (18) has a rectangular cross-section.

3. The distance measuring device according to one of the preceding claims, wherein the narrowing (18) has a height of 5% to 25% or of 10% to 20% or of 15% of a height of the element, or a height of 0.2 mm to 1.0 mm or optional of 0.5 mm to 0.7 mm or of 0.6 mm and/or preferably the narrowing (18) has a depth of 5% to 25% or of 10% to 20% or of 15% of a width of the element, or a depth of 1.0 mm to 3.8 mm or optional of 1.6 mm to 3.2 mm or of 2.4 mm.

4. The distance measuring device according to one of the preceding claims, comprising means to mix a signal decoupled from the resonance structure (5) into a baseband, to amplify, to filter and/or to convert analog-digital and/or preferably with an oscillator (3) configured to generate a signal coupled into the resonance structure (5) and a local oscillator signal (LO-signal), and with a mixer configured to receive a signal decoupled from the resonance structure and the local oscillator signal and/or preferably the resonance structure (5) is configured to be excited electrically and/or magnetically and/or one or the resonance structure is geometrically arranged such that a mode is formed in the resonance structure, wherein the mode is at least predominantly in the form of an H111 mode, and/or a TE011 mode, and/or a TE111 mode and/or preferably one or the mode comprises a part, having the structure of a TM-mode, preferably TM110-mode or E110-mode, respectively.

5. The distance measuring device according to one of the preceding claims, wherein the narrowing (18) at the edge of the sensor can act like a throttle and transform short circuit properties into idling properties.

6. The distance measuring device according to one of the preceding claims, wherein in order to achieve rotationally symmetrical sensor properties, the distance measuring device at least has two resonator coupling points.

7. The distance measuring device according to claim 6, wherein the at least two resonator coupling points are offset geometrically by 90°.

8. The distance measuring device according to claim 6 or 7, wherein in the at least two resonator coupling points signals with a phase difference of 90°, optionally with the same amplitude, can be fed, to produce a circulating of the mode.

9. A method for measuring a distance for measuring metallic or dielectric target objects (20), comprising a sensor having a resonance chamber and a resonance structure (5), wherein the resonance structure has an element (14) of a dielectric material, wherein the element is angular or cylindrical in form, and having a lower side, an upper side and side edges, wherein the side edges run at right angles to the lower side and the upper side, and wherein the side edges have a narrowing (18) in the form of an indentation or a recess, and wherein a resonance frequency of the resonance chamber is dependent on the distance between the element and a target object, wherein the lower side of the element (14), optionally including the edge surfaces of the narrowing (18), is entirely, partially or predominantly metallized, and wherein the sensor comprises an injection moulded plastic positioned around it, which plastic covers the element (14), and a sensor sleeve (17) in which the resonance structure (5) is disposed, wherein an upper region of the element (14) is located above the sensor sleeve, wherein the distance measuring device is configured to couple a signal into the resonance structure, to decouple a second signal from the resonance structure with the given resonance, and to determine the distance to the target object dependent on the resonance of the second signal.

10. The method for measuring a distance according to claim 9, wherein one or the resonance structure (5) geometrically is arranged such that a mode is formed in the resonance structure, wherein the mode is at least predominantly in the form of an H111, a TE011, and/or a TE111 mode.

11. The method for measuring a distance according to claim 9 or 10,
wherein rotationally symmetrical sensor property can be achieved in that a signal is fed in via a first resonator coupling point and is decoupled via a second resonator coupling point that is offset to the first positioned resonator coupling point.

12. The method for measuring a distance according to claim 11, wherein in the at least two resonator coupling points signals with a phase difference of for example 90°, optionally with the same amplitude, can be fed, to produce a circulating of the mode.

## Revendications

1. Dispositif de mesure de distance pour la mesure d'objets cibles métalliques ou diélectriques (20), présentant :
un capteur qui présente une chambre de résonance et une structure de résonance (5), la structure de résonance présentant un élément (14) en matériau diélectrique, l'élément étant anguleux ou cylindrique, et une face inférieure, une face supérieure et des surfaces latérales, les surfaces latérales étant perpendiculaires à la face inférieure et à la face supérieure, et les surfaces latérales présentant un rétrécissement au niveau du bord (18) sous la forme d'un creux ou d'une échancrure, et une fréquence de résonance de la chambre de résonance dépendant de la distance entre l'élément et un objet cible, la face inférieure de l'élément (14), en option y compris les surfaces périphériques du rétrécissement (18), étant totalement, partiellement ou majoritairement métallisée, le capteur présentant une injection périphérique en plastique qui entoure l'élément (14), et le capteur présentant un tube de capteur (17) dans lequel la structure de résonance (5) est disposée, une partie supérieure de l'élément (14) se trouvant au-dessus du tube de capteur, le dispositif de mesure de distance étant adapté pour coupler un signal dans la structure de résonance, pour découpler un second signal en présence de résonance depuis la structure de résonance, et pour dériver de la fréquence du second signal la distance par rapport à l'objet cible.

2. Dispositif de mesure de distance selon la revendication 1, dans lequel le rétrécissement au niveau du bord (18) est un rétrécissement périphérique symétrique en rotation et/ou le rétrécissement au niveau du bord (18) est réalisé de préférence sous forme d'une échancrure ou d'une rainure et/ou le rétrécissement (18) présente de préférence une section transversale rectangulaire.

3. Dispositif de mesure de distance selon une des revendications précédentes, dans lequel le rétrécissement (18) présente une hauteur représentant 5 à 25 % ou 10 à 20 % ou 15 % de la hauteur de l'élément, ou une hauteur 0,2 à 1,0 mm, ou en option 0,5 à 0,7 mm, ou une hauteur de 0,6 mm et/ou le rétrécissement (18) présente une profondeur représentant 5 à 25 % ou 10 à 20 % ou 15 % de la largeur de l'élément, ou une profondeur de 1,0 à 3,8 mm, ou en option 1,6 à 3,2 mm, ou une profondeur de 2,4 mm.

4. Dispositif de mesure de distance selon une des revendications précédentes, comportant des moyens pour mixer, amplifier, filtrer et/ou convertir d'analogique en numérique et/ou de préférence avec un oscillateur (3) un signal pouvant être découplé de la structure de résonance (5) en une bande de base pour générer un signal couplé dans la structure de résonance (5) et un signal d'oscillateur local (signal LO), et comportant un mélangeur auquel le signal découplé de la structure de résonance et le signal d'oscillateur local peuvent être acheminés et/ou la structure de résonance (5) étant réalisés de manière à être excitable électriquement et/ou magnétiquement et/ou la structure de résonance (5) étant conçue géométriquement de manière à ce que s'établisse dans la structure de résonance un mode qui présente au moins majoritairement la forme d'un mode H111 et/ou TE011 et/ou TE111 et/ou un ou le mode contient de préférence une part dont la forme s'exprime comme un mode TM, de préférence un mode TM110 ou un mode E110.

5. Dispositif de mesure de distance selon une des revendications précédentes, dans lequel le rétrécissement (18) au niveau du bord du capteur est adapté de manière à agir comme une inductance et à transformer des propriétés de court-circuit en des propriétés de marche à vide.

6. Dispositif de mesure de distance selon une des revendications précédentes, dans lequel le dispositif de mesure de distance, pour atteindre des propriétés de capteur symétrique en rotation, présente au moins deux points de couplage de résonateur.

7. Dispositif de mesure de distance selon la revendication 6, dans lequel les au moins deux points de couplage de résonateur sont décalés géométriquement de 90°.

8. Dispositif de mesure de distance selon la revendication 6 ou 7, dans lequel, dans les au moins deux points de couplage de résonateur, des signaux ayant une différence de phase de 90°, en option de même amplitude, peuvent être apportés de manière à obtenir une circulation du mode.

9. Procédé de mesure de distance pour la mesure d'objets cibles métalliques ou diélectriques (20), présentant un capteur qui présente une chambre de résonance et une structure de résonance (5), la structure de résonance présentant un élément (14) en matériau diélectrique, l'élément étant anguleux ou cylindrique, et une face inférieure, une face supérieure et des surfaces latérales, les surfaces latérales étant perpendiculaires à la face inférieure et à la face supérieure, et les surfaces latérales présentant un rétrécissement au niveau du bord (18) sous la forme d'un creux ou d'une échancrure, et une fréquence de résonance de la chambre de résonance dépendant de la distance entre l'élément et un objet cible, la face inférieure de l'élément (14), en option y compris les surfaces périphériques du rétrécissement (18), étant totalement, partiellement ou majoritairement métallisée, le capteur présentant une injection périphérique en plastique qui entoure l'élément (14), et un tube de capteur (17) dans lequel la structure de résonance (5) est disposée, une partie supérieure de l'élément (14) se trouvant au-dessus du tube de capteur, le dispositif de mesure de distance étant adapté pour coupler un signal dans la structure de résonance, pour découpler un second signal en présence de résonance depuis la structure de résonance, et pour dériver de la fréquence du second signal la distance par rapport à l'objet cible.

10. Procédé de mesure de distance selon la revendication 9, dans lequel une ou la structure de résonance (5) est conçue géométriquement de manière à ce que s'établisse dans la structure de résonance un mode qui présente au moins majoritairement la forme d'un mode H111 et/ou TE011 et/ou TE111.

11. Procédé de mesure de distance selon la revendication 9 ou 10, dans lequel une propriété de capteur symétrique en rotation est obtenue du fait qu'un signal est apporté par un premier point de couplage de résonateur et par un second point de couplage de résonateur disposé décalé par rapport au premier point.

12. Procédé de mesure de distance selon la revendication 11, dans lequel, dans les au moins deux points de couplage de résonateur, des signaux ayant une différence de phase par exemple de 90°, en option de même amplitude, sont apportés de manière à ce qu'on obtienne une circulation du mode.
